# EUROPEAN PATENT APPLICATION

(11) **EP 4 651 068 A1**
(43) Date of publication of application: **19.11.2025**
(21) Application number: 24757019.5
(22) Date of filing: 05.01.2024
(51) Int. Cl.: G06Q 50/10, G06Q 50/50, G06T 19/00, G06T 13/40, G06F 3/01, G06F 1/16

(54) **ELECTRONIC DEVICE FOR PROVIDING PERFORMANCE CONTENT IN VIRTUAL REALITY AND CONTROL METHOD THEREFOR**

(30) Priority: 13.02.2023 KR 20230018941
(71) Applicant: Samsung Electronics Co., Ltd., Suwon-si, Gyeonggi-do 16677 (KR)
(72) Inventor: KWON, Doil, Suwon-si Gyeonggi-do 16677 (KR); KANG, Namyong, Suwon-si Gyeonggi-do 16677 (KR); KOH, Hansin, Suwon-si Gyeonggi-do 16677 (KR); KIM, Sunkyoung, Suwon-si Gyeonggi-do 16677 (KR); CHOI, Minseok, Suwon-si Gyeonggi-do 16677 (KR)
(74) Representative: Appleyard Lees IP LLP
(86) International application number: PCT/KR2024/000266
(87) International publication number: WO 2024/172288

(57) **Abstract**

A method for controlling an electronic device according to an embodiment of the present document may include: an operation for displaying visual information, indicating the achievement of the designated group mission, in virtual reality provided via at least one display device; an operation for providing, in the virtual reality, content related to the performance in the virtual reality, at least one first avatar corresponding to an artist carrying out the performance, and at least one second avatar corresponding to at least one user among the plurality of users, the content, the at least one first avatar, and the at least one second avatar being provided after the visual information is displayed; and an operation for controlling the at least one first avatar and the at least one second avatar so that the at least one first avatar and the at least one second avatar perform interactions in the virtual reality.

## Description

### [Technical Field]

The disclosure relates to an electronic device for providing performance content in virtual reality and a method of controlling the same.

### [Background Art]

Various services and additional functions provided through electronic devices, such as PCs or smartphones, are gradually increasing. In order to increase the effective value of such electronic devices and satisfy various user needs, communication service providers or electronic device manufacturers have provided various functions and competitively developed electronic devices that are differentiated from those of other companies. Accordingly, various functions provided through the electronic device have gradually advanced.

### [Detailed Description of the Invention]

### [Technical Problem]

An electronic device according to the prior arts that provides performance content (for example, a video of the performance of an artist) in virtual reality only can provide (for example, output) the performance content but cannot provide an environment in which users viewing the performance participate.

According to an embodiment of the document, it is possible to disclose an electronic device for providing various functions or operations allowing a user viewing performance content to participate in the performance rather than a performance in which the user simply views the performance content in virtual reality.

According to an embodiment of the document, it is possible to disclose a method of controlling an electronic device for providing various functions or operations allowing a user viewing performance content to participate in the performance rather than a performance in which the user simply views the performance content in virtual reality.

### [Technical Solution]

An electronic device according to an embodiment of the document may include at least one display device and at least one processor operably connected with the at least one display device, wherein the at least one processor may be configured to, based on a specified group mission being achieved to provide content related to performance through the at least one display device, display visual information indicating that the specified group mission is achieved in virtual reality provided through the at least one display device, whether or not the specified group mission is achieved being determined based on a degree of response of a plurality of users being provided with the content related to the performance or a number of the plurality of users, provide the content related to the performance in the virtual reality, at least one first avatar corresponding to an artist performing the performance, and at least one second avatar corresponding to at least one user among the plurality of users in the virtual reality after the visual information is displayed, and control the at least one first avatar and the at least one second avatar to perform interaction between the at least one first avatar and the at least one second avatar in the virtual reality, based on a user input from the at least one user while the content related to the performance is provided in the virtual reality.

A method of controlling an electronic device according to an embodiment of the document may include, based on a specified group mission being achieved to provide content related to performance through the at least one display device of the electronic device, displaying visual information indicating that the specified group mission is achieved in virtual reality provided through the at least one display device, whether or not the specified group mission is achieved being determined based on a degree of response of a plurality of users being provided with the content related to the performance or a number of the plurality of users, providing the content related to the performance in the virtual reality, at least one first avatar corresponding to an artist performing the performance, and at least one second avatar corresponding to at least one user among the plurality of users in the virtual reality after the visual information is displayed, and controlling the at least one first avatar and the at least one second avatar to perform interaction between the at least one first avatar and the at least one second avatar in the virtual reality, based on a user input from the at least one user while the content related to the performance is provided in the virtual reality.

### [Advantageous Effects]

According to an embodiment of the document, it is possible to provide an electronic device for providing various functions or operations allowing a user viewing performance content to participate in the performance rather than a performance in which the user simply views the performance content in virtual reality.

According to an embodiment of the document, it is possible to provide a method of controlling an electronic device for providing various functions or operations allowing a user viewing performance content to participate in the performance rather than a performance in which the user simply views the performance content in virtual reality.

### [Brief Description of Drawings]

FIG. 1 is a block diagram of an electronic device within a network environment according to various embodiments.
FIG. 2 is a diagram illustrating an example of describing functions or operations in which the electronic device according to an embodiment of the disclosure provides performance content, based on a degree of response of users viewing the performance and controlling avatars to perform interaction between the avatars in virtual reality according to a user input.
FIG. 3 is a diagram illustrating an example of describing a function or operation in which the electronic device according to an embodiment of the document provides information on a group mission for providing performing content in virtual reality from a viewpoint of a user interface.
FIGS. 4A and 4B are diagrams illustrating examples of describing a function or operation in which the electronic device according to an embodiment of the document provides information on a group mission (for example, a degree of response) in virtual reality, based on information on the degree of response determined by an external electronic device (for example, a server).
FIG. 5 is a diagram illustrating an example of describing a function or operation in which the electronic device according to an embodiment of the document provides information on an execution state of the group mission in virtual reality from a viewpoint of the user interface.
FIGS. 6A and 6B are diagrams illustrating examples of describing virtual reality displayed when the group mission according to an embodiment of the document is achieved from a viewpoint of the user interface.
FIG. 7 is a diagram illustrating an example of describing a function or operation in which the electronic device according to an embodiment of the document provides performance content when the group mission is achieved.
FIG. 8 is a diagram illustrating an example of describing a function or operation in which the electronic device according to an embodiment of the document provides performance content in virtual reality in a viewpoint of the user interface.
FIG. 9 is a diagram illustrating an example of describing a function or operation in which the electronic device according to an embodiment of the document switches a view mode of performance content according to motion of the user and displays the performance content.
FIGS. 10A and 10B are diagrams illustrating examples of describing a second view mode according to an embodiment of the document from a viewpoint of the user interface.
FIG. 11 is a diagram illustrating an example of describing a function or operation in which the electronic device according to an embodiment of the disclosure controls a plurality of avatars to perform interaction between the plurality of avatars displayed in virtual reality from a viewpoint of the user interface.
FIG. 12 is a diagram illustrating an example of describing a function or operation in which the electronic device according to an embodiment of the disclosure outputs a sound signal, based on a user input for the external electronic device, from a viewpoint of the user interface.

### [Mode for Carrying out the Invention]

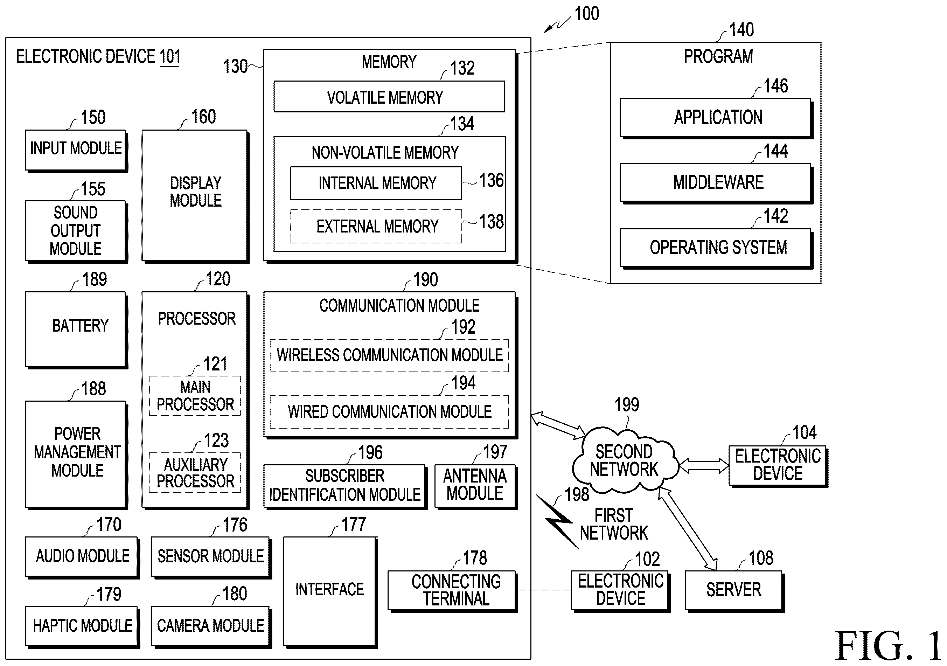

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a specified high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

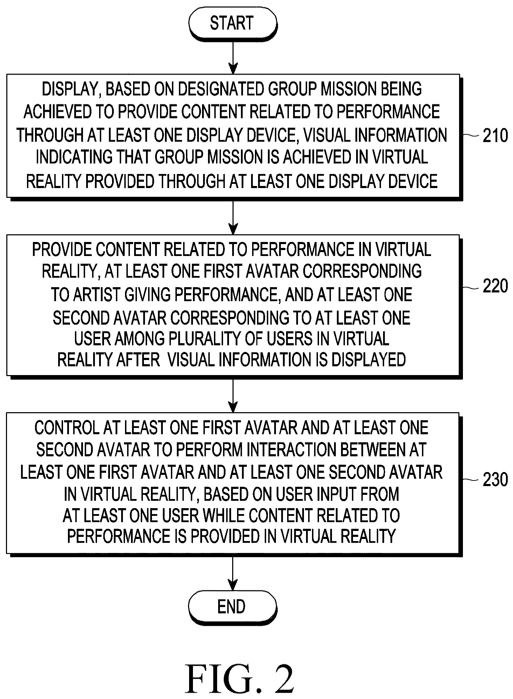

FIG. 2 is a diagram illustrating an example of describing functions or operations in which the electronic device 101 according to an embodiment of the document provides performance content 800, based on a degree of response of users viewing the performance and controlling avatars (for example, a first avatar 330 and a second avatar 340) to perform interactions between the avatars (for example, the first avatar 330 and the second avatar 340) in virtual reality according to the user's input.

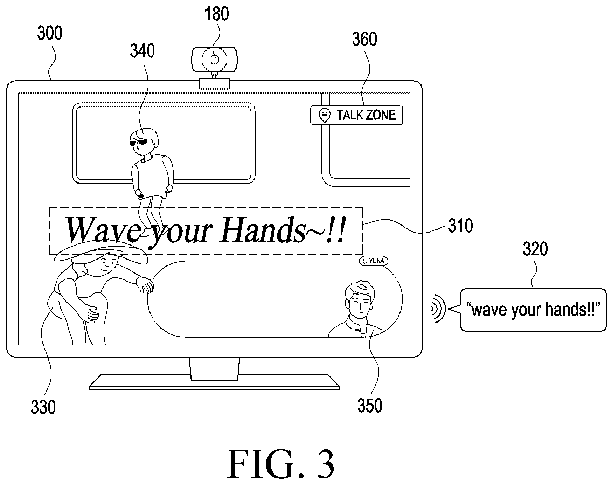

Referring to FIG. 2, in operation 210, the electronic device 101 (for example, the processor 120) according to an embodiment of the document may display visual information (for example, first visual information 510) indicating that a specified group mission has been achieved in virtual reality provided through at least one display 300, based on the specified group mission for providing content related to the performance (for example, performance content 800) through at least one display device 300 (for example, the display module 160) being achieved. FIG. 3 is a diagram illustrating an example of describing a function or an operation in which the electronic device 101 according to an embodiment of the document provides information on a group mission for providing the performance content 800 in virtual reality from a viewpoint of a user interface. As illustrated in FIG. 3, the electronic device 101 according to an embodiment of the document may display, through the display device 300, a virtual reality screen including an avatar (for example, the first avatar 330) corresponding to the user of the electronic device 101, an avatar (for example, the second avatar 340) corresponding to an artist performing a performance, a user's image (for example, a first image 350) captured by the camera module 180, an object (for example, a first object 360) for displaying a screen configured to transmit and receive chatting messages between a plurality of users viewing the performance, and/or group mission information 310 indicating what the group mission is. The display device 300 according to an embodiment of the document may include the processor 120 and the camera module 180 (for example, the display device 300, the processor 120, and the camera module 180 integratively constitute one electronic device 101), and the display device 300, the processor 120, and the camera module 180 may be in a connected state to be operable with each other as individual devices. The first avatar 330 according to an embodiment of the document may be an avatar specified by the user or an avatar having a predetermined (for example, at a time point of manufacturing of the electronic device 101) shape. The second avatar 340 according to an embodiment of the disclosure may be an avatar specified by the artist performing the performance or an avatar having a predetermined (for example, at a time point of manufacturing of the electronic device 101) shape. The electronic device 101 according to an embodiment of the document may obtain information on the second avatar 340 from an external electronic device (for example, a server 400). The electronic device 101 according to an embodiment of the document may display the second avatar 340 in virtual reality by using the information on the second avatar 340 obtained from the external electronic device (for example, the server 400). Similarly, the electronic device 101 according to an embodiment of the document may obtain information on various visual objects constituting virtual reality from the external electronic device (for example, the server 400) and display the same. Information on a group mission (for example, a mission of which the purpose is achieved when users of a specified percentage (for example, 75%) or more of the users viewing the performance wave their hands and/or a mission of which the purpose is achieved when a predetermined number of users view the performance (for example, access the server) may be displayed as a visual object (for example, the first visual object 310) in virtual reality and/or output as sound information (for example, first sound information 320) through a speaker (for example, the sound output module 155). The group mission according to an embodiment of the document may be predetermined for each type of performance content (for example, whether the performance is a singer's concert, a lecture, or the like) or may be specified by a performer 810 (for example, an artist). The electronic device 101 according to an embodiment of the document may obtain information on the group mission from the external electronic device (for example, the server 400). The electronic device 101 according to an embodiment of the document may output a visual object (for example, the first visual object 310) and/or sound information (for example, the first sound information 320), based on the information on the group mission obtained from the external electronic device (for example, the server 400).

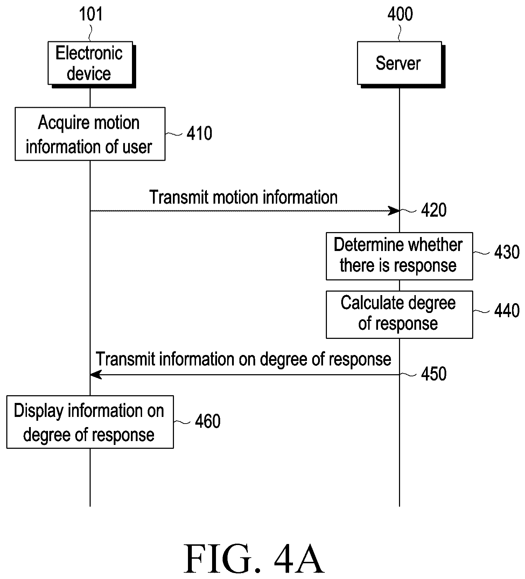

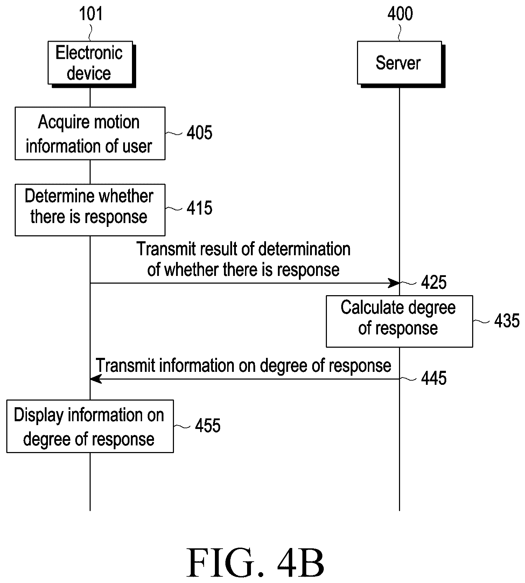

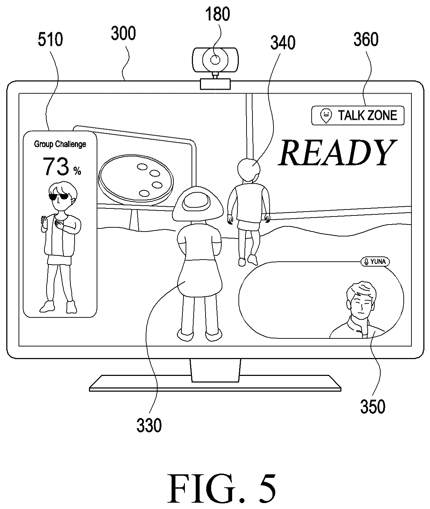

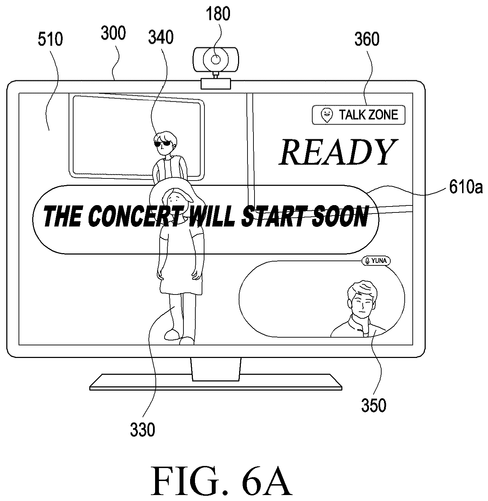

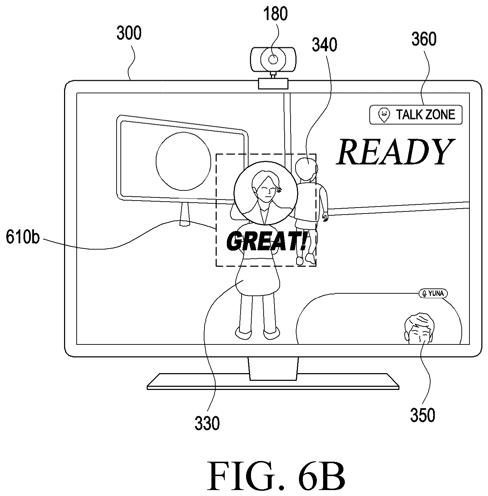

FIGS. 4A and 4B are diagrams examples of describing a function or an operation in which the electronic device 101 according to an embodiment of the document provides information on a group mission (for example, a response) in virtual reality, based on information on the degree of response determined by the external electronic device (for example, the server 400). FIG. 5 is a diagram illustrating an example of describing a function or an operation in which the electronic device 101 according to an embodiment of the document provides information (for example, first information 510) on an execution state of the group mission in virtual reality in a viewpoint of a user interface. FIGS. 6A and 6B are diagrams illustrating examples of describing virtual reality displayed when a group mission according to an embodiment of the document is achieved in a viewpoint of a user interface.

Referring to FIG. 4A, the electronic device 101 according to an embodiment of the document may obtain motion information of the user in operation 410. The electronic device 101 according to an embodiment of the document may obtain user's motion information by capturing motion of the user through the camera module 180. The electronic device 101 according to an embodiment of the document may transmit the obtained motion information to the external electronic device (for example, the server 400) in operation 420. The external electronic device (for example, the server 400) according to an embodiment of the document may determine whether there is a user's response (for example, whether the user waves his/her hands) in order to determine whether a group mission is achieved in operation 430. The server 400 according to an embodiment of the document may determine whether the user is responding based on the obtained motion information of the user. The external electronic device (for example, the server 400) according to an embodiment of this document may extract a feature point (for example, fingertip, elbow, or the like) from the motion information of the user and determine whether the user is currently performing the mission (for example, waving his/her hands), based on whether motion of the feature point is similar to or substantially the same as a template pre-stored in the external electronic device (for example, the server 400) (for example, whether a direction of the motion of the feature point is the same as a direction of the motion of the template). In operation 440, the external electronic device (for example, the server 400) according to an embodiment of the document may calculate a degree of response, based on the result of the determination of whether there is the response in operation 430. The external electronic device (for example, the server 400) according to an embodiment of the document may determine whether a plurality of users are performing the current mission, based on motion of a user for each of the plurality of electronic devices from the plurality of electronic devices. The external electronic device (for example, the server 400) according to an embodiment of the document may calculate the degree of response of the users, based on the number of electronic devices accessing the external electronic device (for example, the server 400). For example, when it is identified that the number of electronic devices accessing the server 400 is 100 and users corresponding to 75 electronic devices among them are waving their hands, the external electronic device (for example, the server 400) according to an embodiment of the document may determine the degree of response as 75%. In operation 450, the external electronic device (for example, the server 400) according to an embodiment of the document may transmit information on the degree of response calculated in operation 440 to the electronic device 101 in operation 450. The electronic device 101 according to an embodiment of the document may display information indicating an execution state of the group mission (for example, first information 510 as information on the degree of response) in virtual reality in operation 460 as illustrated in FIG. 5. The external electronic device (for example, the server 400) according to an embodiment of the document may also transmit information (for example, information on whether the degree of response is higher than or equal to a threshold rate) on whether the group mission is achieved to the electronic device 101 in operation 450. When the group mission is achieved, the electronic device 101 according to an embodiment of the document may display visual objects (for example, a second visual object 610a and/or a third visual object 610b) indicating that the group mission has been achieved in virtual reality as illustrated in FIGS. 6A and 6B. Data on the visual objects (for example, the second visual object 610a and/or the third visual object 610b) indicating that the group mission has been achieved may be stored in the electronic device 101 or obtained from the external electronic device (for example, the server 400).

Referring to FIG. 4B, the electronic device 101 according to an embodiment of the document may obtain motion information of the user in operation 405. The electronic device 101 according to an embodiment of the document may obtain the motion information of the user by capturing motion of the user through the camera module 180. The electronic device 101 according to an embodiment of the document may determine whether there is a user's response (for example, whether the user is waving his/her hands) in operation 415. The electronic device 101 according to an embodiment of the document may extract a feature point (for example, fingertip, elbow, or the like) from the motion information of the user and determine whether the user is currently performing the mission (for example, waving his/her hands), based on whether motion of the feature point is similar to or substantially the same as a template pre-stored in the electronic device 101 (for example, whether a direction of the motion of the feature point is the same as a direction of the motion of the template). In operation 425, the electronic device 101 according to an embodiment of the document may transmit the result of the determination of whether there is the response determined according to operation 415 to the external electronic device (for example, the server 400). The external electronic device (for example, the server 400) according to an embodiment of the document may calculate the degree of response in operation 435. The external electronic device (for example, the server 400) according to an embodiment of the document may receive information on whether the user of each of a plurality of electronic devices is performing a mission (for example, waving his/her hands) from the plurality of electronic devices. The external electronic device (for example, the server 400) according to an embodiment of the document may calculate a degree of response of the users, based on the number of electronic devices accessing the external electronic device (for example, the server 400). For example, when it is identified that the number of electronic devices accessing the server 400 is 100 and users corresponding to 75 electronic devices among them are waving their hands, the external electronic device (for example, the server 400) according to an embodiment of the document may determine the degree of response as 75%. In operation 445, the external electronic device (for example, the server 400) according to an embodiment of the document may transmit information on the degree of response calculated in operation 435 to the electronic device 101. The electronic device 101 according to an embodiment of the document may display information (for example, first information 510 as information on the degree of response) indicating an execution state of the group mission in virtual reality in operation 455 as illustrated in FIG. 5. The external electronic device (for example, the server 400) according to an embodiment of the document may also transmit information (for example, information on whether the degree of response is higher than or equal to a threshold rate) on whether the group mission is achieved to the electronic device 101 in operation 445. When the group mission is achieved, the electronic device 101 according to an embodiment of the document may display visual objects (for example, a second visual object 610a and/or a third visual object 610b) indicating that the group mission has been achieved in virtual reality as illustrated in FIGS. 6A and 6B. Data on the visual objects (for example, the second visual object 610a and/or the third visual object 610b) indicating that the group mission has been achieved may be stored in the electronic device 101 or obtained from the external electronic device (for example, the server 400).

After the visual information (for example, the second visual object 610a and/or the third visual object 610b) is displayed in operation 220, the electronic device 101 according to an embodiment of the document may provide content (for example, performance content 800) related to the performance in virtual reality, at least one second avatar 340 corresponding to a performer 810 (for example, an artist) performing the performance, and/or at least one third avatar 820 corresponding to at least one user among a plurality of users in virtual reality. The performance content 800 according to an embodiment of the document may include content (for example, outputting an actual scene in virtual reality) displayed in virtual reality through real-time streaming. In this case, the performance content 800 according to an embodiment of the document may be transmitted from the external electronic device (for example, the server 400) to the electronic device 101. Alternatively, the performance content 800 according to an embodiment of the document may be content pre-stored in the electronic device 101 and/or the server 400. The second avatar 340 according to an embodiment of the document may be an avatar specified by the performer 810 or an avatar having a predetermined shape (for example, at a time point of manufacturing of the electronic device 101). The third avatar 820 according to an embodiment of the document may be an avatar specified by a user of another electronic device or an avatar having a predetermined shape (for example, at a time point of manufacturing of the other electronic device). The electronic device 101 according to an embodiment of the document may obtain information on the third avatar 820 from the external electronic device (for example, the server 400). The electronic device 101 according to an embodiment of the document may display the third avatar 820 in virtual reality by using the information on the third avatar 820 obtained from the external electronic device (for example, the server 400).

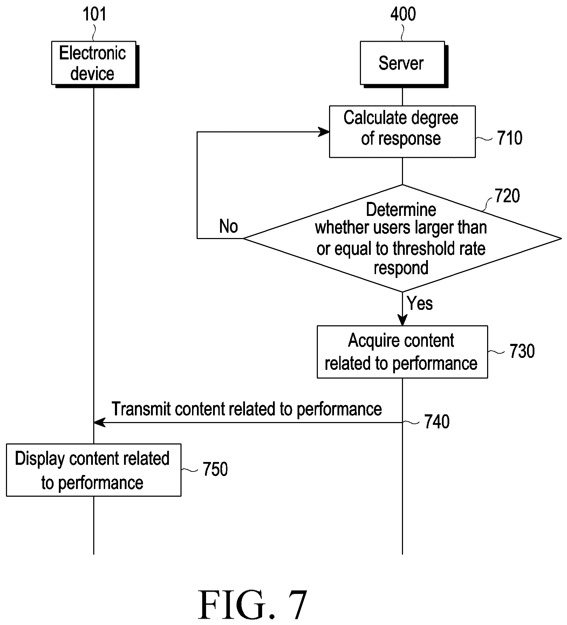

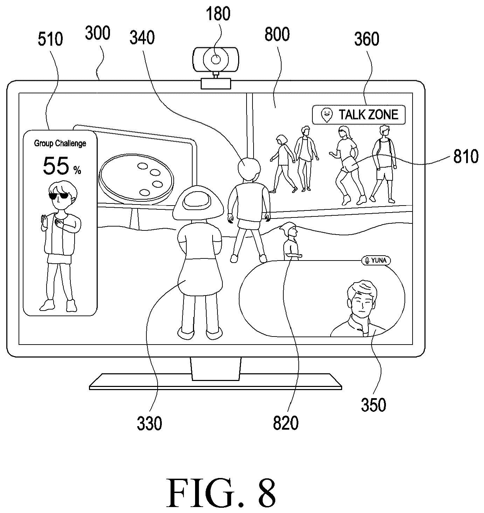

FIG. 7 is a diagram illustrating an example of describing a function or operation in which the electronic device 101 provides performance content 800 when a group mission is achieved according to an embodiment of the document. FIG. 8 is a diagram illustrating an example of describing the function or operation in which the electronic device 101 provides the performance content 800 in virtual reality from a viewpoint of a user interface according to an embodiment of the document. Referring to FIG. 7, the external electronic device (for example, the server 400) according to an embodiment of the document may calculate a degree of response in operation 710. The external electronic device (for example, the server 400) according to an embodiment of the document may calculate a degree of response of the users, based on the number of electronic devices accessing the external electronic device (for example, the server 400). For example, when it is identified that the number of electronic devices accessing the external electronic device (for example, the server 400) is 100 and users corresponding to 75 electronic devices among them are waving their hands, the external electronic device (for example, the server 400) according to an embodiment of the document may determine the degree of response as 75%. The external electronic device (for example, the server 400) according to an embodiment of the document may determine whether users larger than or equal to a threshold rate are responding (for example, the purpose of the group mission is achieved) in operation 720. When the threshold rate is 75%, the external electronic device (for example, the server 400) according to an embodiment of the document may determine that the users larger than or equal to the threshold rate have responded (for example, the purpose of the group mission is achieved). The external electronic device (for example, the server 400) according to an embodiment of the document may obtain content related to the performance (for example, obtain an image captured by a camera placed at the site of the performance), based on the determination that the users larger than or equal to the threshold rate has responded (for example, the purpose of the group mission is achieved) in operation 730. The external electronic device (for example, the server 400) according to an embodiment of the document may transmit the content related to the performance to the electronic device 101 in operation 740. Operation 730 and/or operation 740 according to an embodiment of the document may be performed based on a trigger input (for example, a voice input) from the performer 810 (for example, the artist) performing the performance. For example, the external electronic device (for example, the server 400) according to an embodiment of the document may provide the performer 810 with information indicating that the group mission is achieved based on the determination that the users larger than or equal to the threshold rate have responded (for example, the purpose of the group mission is achieved). The external electronic device (for example, the server 400) according to an embodiment of the document may perform operation 730 and/or operation 740, based on the trigger input being obtained from the performer 810. Operation 730 according to an embodiment of the document may be omitted when the performance content 800 is pre-stored in the server 400. In this case, the external electronic device (for example, the server 400) according to an embodiment of the document may perform operation 740 after a predetermined time from a time point at which it is determined that the users larger than or equal to the threshold rate have responded (for example, the purpose of the group mission is achieved). The electronic device 101 according to an embodiment of the document may display the content related to the performance (for example, the performance content 800) in virtual reality in operation 750 as illustrated in FIG. 8.

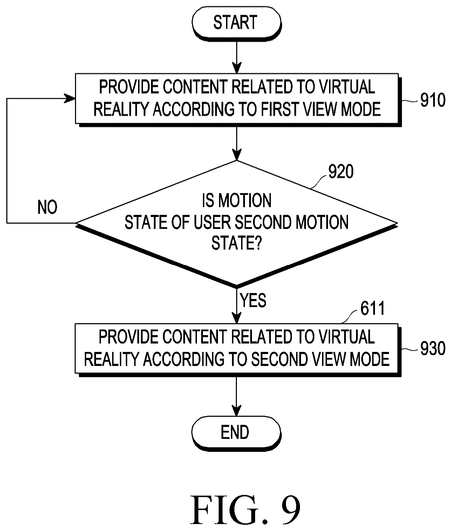

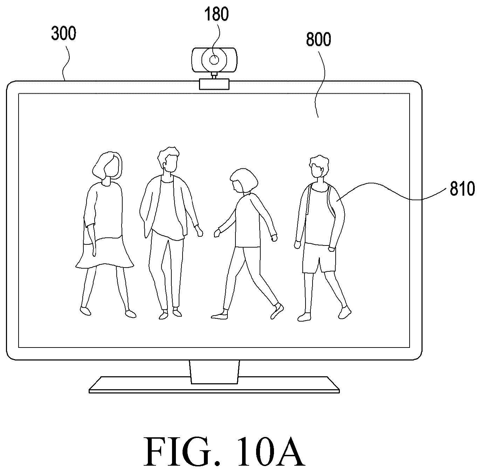

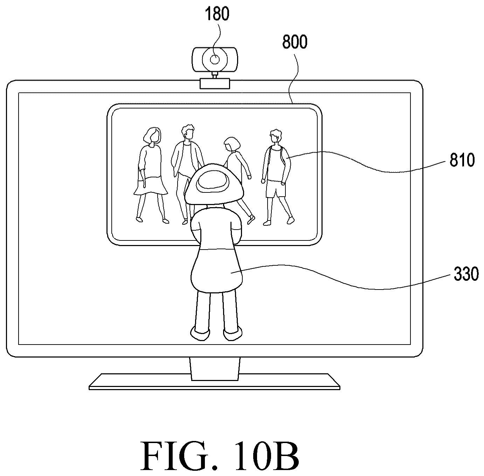

FIG. 9 is a diagram illustrating an example of describing a function or operation in which the electronic device switches a view mode of performance content according to motion of the user and displays the performance content according to an embodiment of the document. FIGS. 10A and 10B are diagrams illustrating examples of describing a second view mode from a viewpoint of a user interface according to an embodiment of the document.

Referring to FIG. 9, the electronic device 101 according to an embodiment of the document may provide content related to virtual reality according to a first view mode in operation 910. The first view mode according to an embodiment of the document may be a mode of displaying all of the content related to the performance (for example, the performance content 800) in virtual reality, at least one second avatar 340 corresponding to the performer 810 (for example, the artist) performing the performance, and/or at least one first avatar 330 corresponding to at least one user among a plurality of users. When a motion state of the user is a first motion state (for example, the user is responding), the electronic device 101 according to an embodiment of the document may provide virtual reality according to the first view mode. Whether the user according to an embodiment of the document is in the first motion state may be determined by the electronic device 101 or the external electronic device (for example, the server 400). The electronic device 101 and/or the external electronic device (for example, the server 400) according to an embodiment of the disclosure may determine similarity between a pre-stored template and motion of a feature point of the user and, when the similarity is larger than or equal to a specified threshold, may determine that the motion state of the user is the first motion state.

The electronic device 101 according to an embodiment of the disclosure may determine whether the motion state of the user is a second motion state (for example, a state in which the user is not responding or the user is not viewing the performance) in operation 920. Whether the user according to an embodiment of the document is in the second motion state may be determined by the electronic device 101 or the external electronic device (for example, the server 400). The electronic device 101 and/or the external electronic device (for example, the server 400) according to an embodiment of the disclosure may determine similarity between a pre-stored template and motion of a feature point of the user and, when the similarity is smaller than a specified threshold, may determine that the motion state of the user is the second motion state. Alternatively, even when the user is not captured by the camera module 180, the electronic device 101 and/or the external electronic device (for example, the server 400) according to an embodiment of the disclosure may determine the motion state of the user is the same as the second motion state.

In operation 930, the electronic device 101 according to an embodiment of the document may provide content related to virtual reality according to the second view mode, based on determination that the motion state of the user is the second motion state according to operation 920. The second view mode according to an embodiment of the document may include a mode of displaying the content related to the performance (for example, the performance content 800) through a full screen as illustrated in FIG. 10A. The second view mode according to an embodiment of the document may include a mode of displaying content related to the performance (for example, the performance content 800) and at least one first avatar 330 corresponding to at least one user among a plurality of users as illustrated in FIG. 10B. Whether the user according to an embodiment of the document is in the second motion state may be determined by the electronic device 101 or the external electronic device (for example, the server 400). The electronic device 101 and/or the external electronic device (for example, the server 400) according to an embodiment of the disclosure may determine similarity between a pre-stored template and motion of a feature point of the user and, when the similarity is smaller than a specified threshold, may determine that the motion state of the user is the second motion state.

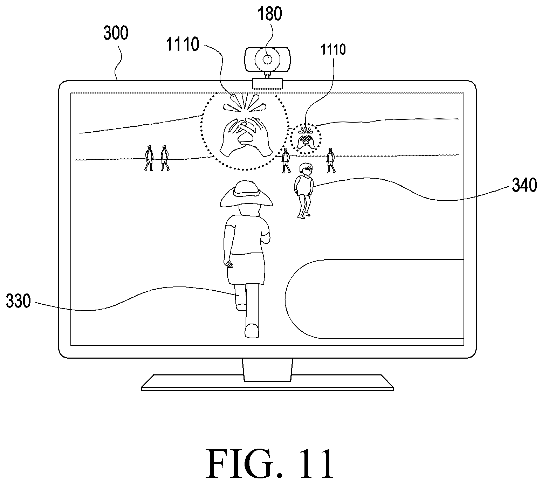

FIG. 11 is a diagram illustrating an example of describing a function or operation in which the electronic device 101 according to an embodiment of the document controls a plurality of avatars (for example, the first avatar 330 and the second avatar 340) to perform interaction (for example, a high five action) between the plurality of avatars (for example, the first avatar 330 and the second avatar 340) displayed in virtual reality from a viewpoint of a user interface. Referring to FIG. 11, the electronic device 101 according to an embodiment of the document may display an indicator 1110 indicating that the interaction is possible between the avatars (for example, the first avatar 330 and the second avatar 340) around the avatars, based on a user input for a second external electronic device (for example, a controller which can be carried by the user's hand) operably connected with the electronic device 101. When it is detected that the avatars (for example, the first avatar 330 and the second avatar 340) around which the indicator 110 is displayed are located within a specified distance from each other, the electronic device 101 according to an embodiment of the document may control the avatars (for example, the first avatar 330 and the second avatar 340) to perform specified interaction (for example, the high five action). The electronic device 101 according to an embodiment of the document may control the avatar to move in a specified direction in virtual reality, based on the user input for the second external electronic device (for example, the controller which can be carried by the user's hand) operably connected with the electronic device 101.

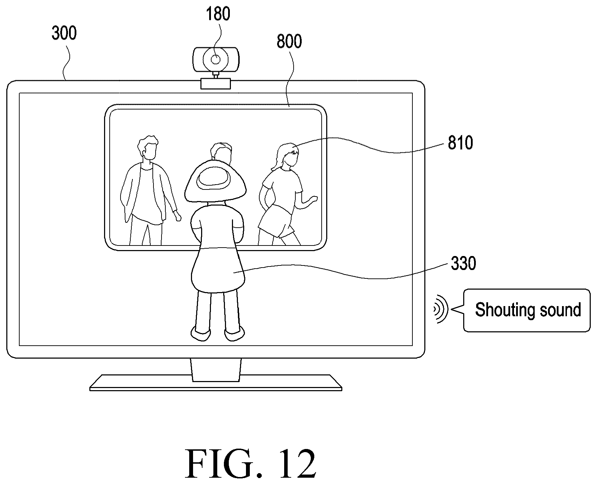

FIG. 12 is a diagram illustrating an example of describing a function or operation in which the electronic device 101 outputs an sound signal (for example, a shouting sound), based on a user input for an external electronic device (for example, the second external electronic device) from a viewpoint of a user interface according to an embodiment. Referring to FIG. 12, when obtaining the user input for the external electronic device (for example, the second external electronic device), the electronic device 101 according to an embodiment of the document may output a predetermined sound signal (for example, the shouting sound) through the electronic device 101. Although not illustrated, the electronic device 101 according to an embodiment of the document may transmit an emoticon to an avatar located around the first avatar 330 (for example, an avatar located in front of the first avatar 330), based on a user input for the second external electronic device (for example, a controller which can be carried by the user's hand). The emotion (for example, a heart emotion) according to an embodiment of the document may be specified by the user, or a predetermined emotion may be transmitted.

An electronic device according to an embodiment of the document may include at least one display device and at least one processor operably connected with the at least one display device, wherein the at least one processor may be configured to, based on a specified group mission being achieved to provide content related to performance through the at least one display device, display visual information indicating that the specified group mission is achieved in virtual reality provided through the at least one display device, whether or not the specified group mission is achieved being determined based on a degree of response of a plurality of users being provided with the content related to the performance or a number of the plurality of users, provide the content related to the performance in the virtual reality, at least one first avatar corresponding to an artist performing the performance, and at least one second avatar corresponding to at least one user among the plurality of users in the virtual reality after the visual information is displayed, and control the at least one first avatar and the at least one second avatar to perform interaction between the at least one first avatar and the at least one second avatar in the virtual reality, based on a user input from the at least one user while the content related to the performance is provided in the virtual reality.

A method of controlling an electronic device according to an embodiment of the document may include an operation of, based on a specified group mission being achieved to provide content related to performance through the at least one display device of the electronic device, displaying visual information indicating that the specified group mission is achieved in virtual reality provided through the at least one display device, whether or not the specified group mission is achieved being determined based on a degree of response of a plurality of users being provided with the content related to the performance or a number of the plurality of users, an operation of providing the content related to the performance in the virtual reality, at least one first avatar corresponding to an artist performing the performance, and at least one second avatar corresponding to at least one user among the plurality of users in the virtual reality after the visual information is displayed, and an operation of controlling the at least one first avatar and the at least one second avatar to perform interaction between the at least one first avatar and the at least one second avatar in the virtual reality, based on a user input from the at least one user while the content related to the performance is provided in the virtual reality.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor (e.g., the processor 2520) of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a camera;
a communication module;
a display; and
at least one processor operably connected with the camera, the communication module, and the display,
wherein the at least one processor is configured to:
obtain a plurality of images comprising information on motion of a user through the camera;
transmit, through the communication module, the obtained plurality of images to an external electronic device operably connected with the electronic device;
based on whether a group mission is achieved, which is determined using the motion of the user, obtain, through the communication module, content related to performance from the external electronic device; and
display, through the display, the obtained content related to the performance.

2. The electronic device of claim 1, wherein the at least one processor is further configured to, based on the at least one image obtained by the camera, determine whether the user is responding to achieve the group mission.

3. The electronic device of claim 1 or 2, wherein the content related to the performance is represented through virtual reality,
wherein the content related to the performance comprises information on a degree of response, and
wherein the at least one processor is further configured to display the information on the degree of response in the virtual reality.

4. The electronic device of one of claims 1 to 3, wherein the at least one processor is further configured to, in case that the motion of the user identified by the camera is identified as a first motion state, provide the virtual reality in a first view mode, and
wherein the first view mode is a mode configured such that the content related to the performance, at least one first avatar corresponding to the user, a second avatar corresponding to a second user performing the performance, and the information on the degree of response are displayed in the virtual reality.

5. The electronic device of one of claims 1 to 4, wherein the at least one processor is further configured to, in case that the motion of the user identified by the camera is identified as a second motion state, provide the virtual reality in a second view mode, and
wherein the second view mode is a mode configured such that the content related to the performance is displayed through a full screen.

6. The electronic device of one of claims 1 to 5, wherein the at least one processor is further configured to, based on reception of a first input signal from the external electronic device, switch the first view mode and the second view to each other.

7. The electronic device of one of claims 1 to 6, wherein the electronic device comprises at least one speaker, and
wherein the at least one processor is further configured to, based on reception of a second input signal from the external electronic device, output, through the at least one speaker, a specified sound signal.

8. The electronic device of one of claims 1 to 7, wherein the at least one processor is further configured to, based on reception of a third input signal from the external electronic device, transmit a specified emoticon to at least one third avatar located around the at least one second avatar in the virtual reality.

9. The electronic device of one of claims 1 to 8, wherein the at least one processor is further configured to, in case that a user input for performing interaction between the at least one first avatar and the at least one second avatar is obtained, display a visual object having a specified shape around the at least one second avatar.

10. The electronic device of one of claims 1 to 9, wherein the at least one processor is further configured to, based on the at least one first avatar and the at least one second avatar approaching within a specified distance, perform specified interaction.

11. A method comprising:
obtaining, through a camera of an electronic device, a plurality of images comprising information on motion of a user;
transmitting, through a communication module of the electronic device, the obtained plurality of images to an external electronic device operably connected with the electronic device;
based on whether a group mission is achieved, which is determined using the motion of the user, obtaining, through the communication module, content related to performance from the external electronic device; and
displaying, through a display of the electronic device, the obtained content related to the performance.

12. The method of claim 11, further comprising, based on the at least one image obtained by the camera, determining whether the user is responding to achieve the group mission.

13. The method of claim 11 or 12, wherein the content related to the performance is represented through virtual reality,
wherein the content related to the performance comprises information on a degree of response, and
wherein the method further comprises displaying the information on the degree of response in the virtual reality.

14. The method of one of claims 11 to 13, further comprising, in case that the motion of the user identified by the camera is identified as a first motion state, providing the virtual reality in a first view mode,
wherein the first view mode is a mode configured such that the content related to the performance, at least one first avatar corresponding to the user, a second avatar corresponding to a second user performing the performance, and the information on the degree of response are displayed in the virtual reality.

15. The method of one of claims 11 to 14, further comprising, in case that the motion of the user identified by the camera is identified aas a second motion state, providing the virtual reality in a second view mode,
wherein the second view mode is a mode configured such that the content related to the performance is displayed through a full screen.
